# EUROPÄISCHE PATENTSCHRIFT

(11) **EP 2 652 840 B1**
(45) Veröffentlichungstag und Bekanntmachung des Hinweises auf die Patenterteilung: **24.08.2016**
(21) Anmeldenummer: 10793257.6
(22) Anmeldetag: 17.12.2010
(51) Int. Cl.: H01B 7/04, H01R 9/05, H01B 7/18, H01R 13/56, H02G 15/007, H01R 13/58, H02G 3/06

(54) **KABELVERSCHRAUBUNG**
CABLE GLAND
RACCORD À VIS POUR CÂBLE

(43) Veröffentlichungstag der Anmeldung: 23.10.2013
(73) Patentinhaber: Huber+Suhner AG, 9100 Herisau (CH)
(72) Erfinder: CASANOVA, Reto, CH-8330 Pfäffikon (CH)
(74) Vertreter: Rentsch Partner AG
(86) Internationale Anmeldenummer: PCT/EP2010/070061
(87) Internationale Veröffentlichungsnummer: WO 2012/079644

(56) Entgegenhaltungen:
- EP-A1- 1 689 057
- EP-A2- 0 803 954
- DE-A1- 2 405 241
- DE-C1- 10 135 971
- DE-U1- 9 201 848
- US-A- 5 984 724

## Beschreibung

### TECHNISCHES GEBIET

Die vorliegende Erfindung bezieht sich auf das Gebiet der elektrischen Kabel. Sie betrifft eine Kabelverschraubung gemäss dem Oberbegriff des Anspruchs 1.

### STAND DER TECHNIK

Bei Anwendungen im Bahnbereich werden zur versorgungs- und signaltechnischen Verbindung zwischen einzelnen Wagen und/oder Triebköpfen und/oder Lokomotiven eines Zuges meist mehradrige dicke, (relativ) flexible Kabel eingesetzt, die für den zu überbrückenden Abstand konfektioniert werden müssen. Die Konfektionierung gestaltet sich wegen Platzproblemen meist schwierig. Dies gilt insbesondere für die notwendigen Kabelverschraubungen, mit denen das Kabel endseitig in die Gehäuse der zu verbindenden Teile eingeführt und dort verschraubt wird.

In einer früheren Anmeldung (DE 101 35 971 C1) sind zur Vereinfachung der Konfektionierung eine Kabelverschraubung und ein Kabelknickschutz für derartige Kabel vorgeschlagen worden, bei dem eine verbesserte Konfektionierung dadurch erreicht wird, dass der Aussendurchmesser der Knickschutztülle kleiner ist als die lichte Weite der Durchgangsbohrung eines ersten Kabelverschraubungsteils, und dass mit den Verschraubungsteilen zusammen wirkende Haltemittel als abnehmbare Halteteile ausgebildet sind, die mit der Knickschutztülle bezüglich der axialen Richtung in Eingriff stehen.

Bei dieser bekannten Kabelverschraubung sind eine äussere Abschirmung des Kabels und dessen Anschluss im Bereich der Kabelverschraubung nicht berücksichtigt. Gerade für Anwendungen im Bahnbereich kann jedoch die Anforderung bestehen, dass elektrische Potentialunterschiede zwischen den zu verbindenden Wagen und/oder Triebköpfen und/oder Lokomotiven eines Zuges über eine äussere Abschirmung in den Kabeln ausgeglichen werden müssen. Hierbei kann es kurzzeitig zu vergleichsweise hohen Strömen im mehrstelligen Ampere-Bereich in der Kabelabschirmung kommen, die sowohl innerhalb des Kabels als auch in den Kabelverschraubungen beherrscht werden müssen. Darüber hinaus ist es wichtig, eine Kontaktierung der Abschirmung zu haben, die gegen die im Betrieb auftretenden Schwingungen und starken Vibrationen bzw. stossartigen Bewegungen des Kabels unempfindlich ist.

In der Vergangenheit ist bereits eine Vielzahl von Vorschlägen gemacht worden, wie eine Kabelabschirmung einfach und sicher mit einer Kabelverschraubung verbunden werden kann.

Aus der Druckschrift DE 297 15 811 U1 ist eine Kabelverschraubung für Erdungs- oder Abschirmkabel bekannt, bei der ringförmiger Kontakteinsatz mit seinen angeformten, sich in axialer Richtung erstreckenden Kontaktfingern beim Verschrauben von aussen kontaktierend gegen das freigelegte Abschirmgeflecht des Kabels gepresst wird. Ein solcher einfacher Presskontakt ist jedoch zu empfindlich gegen Bewegungen des Kabels relativ zur Verschraubung, zumal Reibungen zwischen Kontaktfinger und Abschirmung die Abschirmung leicht beschädigen können.

Aus der Druckschrift DE 20 2005 014 601 U1 Verbindungsanordnung zum Verbinden eines geschirmten Kabels mit einem elektrisch leitenden Gehäuse bekannt, wobei das Kabel mindestens einen Innenleiter und eine den Innenleiter umgebende elektrisch leitende Schirmung aufweist. An dem Gehäuse ist eine elektrisch leitfähige Schirmauflage angeordnet, von der das Kabel wenigstens teilweise aufgenommen ist. Eine erste Andruckvorrichtung presst die Schirmung an einen Kontaktbereich der Schirmauflage an. Die Schirmauflage weist weiterhin einen Haltebereich auf, an den das Kabel zum mechanischen Verbinden mit dem Gehäuse mittels einer zweiten Andruckvorrichtung anpressbar ist. Als Andruckvorrichtungen dienen dabei beispielsweise Rohrschellen. Es handelt sich hierbei jedoch nicht um eine Kabelverschraubung.

Aus der Druckschrift EP 0 542 102 A1 ist ein elektrischer Steckverbinder für ein abgeschirmtes Kabel bekannt, bei dem die elektrische Verbindung zwischen der Abschirmung und dem Steckverbinder-Gehäuse durch ein elektrisch leitendes Elastomerteil erfolgt, das in Axialrichtung komprimiert im Gehäuse gehalten ist und den Steckverbinder zugleich gegen Feuchtigkeit abdichtet. Für diese Lösung gelten ähnliche Nachteile wie bei der oben erwähnten DE 297 15 811 U1.

Aus der Druckschrift EP 0 803 954 A2 ist eine Kabelverschraubung bekannt, die einen an einem Gehäuse fixierbaren Stutzen und ein mit dem Stutzen verschraubbares Schraubelement, durch welche ein Kabel hindurchführbar ist, umfasst. In einem Innenraum des Stutzens ist zwischen dem Schraubelement und einer Stützfläche des Stutzens ein Haltering vorgesehen, welcher durch das Schraubelement in Richtung der Stützfläche beaufschlagbar ist. Der Haltering weist eine Druckfläche auf. Bei Beaufschlagung des Halterings durch das Schraubelement ist ein von einem Innenleiterbereich des Kabels nach aussen geführter Kabelschirm zwischen der Druckfläche und einer Gegenfläche einklemmbar und steht dadurch in elektrisch leitender Verbindung mit dem Stutzen. Nachteilig ist hierbei das nicht genau kontrollierbare Einklemmen der Abschirmung durch die Verschraubung selbst.

Aus der Druckschrift US 6,007,383 ist schliesslich eine Verbindungsvorrichtung für ein abgeschirmtes Kabel bekannt, bei der die Abschirmung über eine Hülse eines Aufnahmeteils geschoben und dort fixiert wird, welches Aufnahmeteil dann mit einem becherförmigen Befestigungsteil verschraubt werden kann. Diese Lösung ist für ein Kabel mit angespritzter Knickschutztülle nicht geeignet. Sie ist aufgrund der Art der Befestigung der Abschirmung insbesondere auch nicht für Kabel geeignet, die stark auf Biegung beansprucht werden.

Aus der DE 24 05 241 ist schliesslich eine Kontakteinrichtung für Kabelanschlüsse, insbesondere für koaxiale und/oder geschirmte Kabel bekannt, bestehend aus einer elektrisch leitend ausgebildeten Anschlussbuchse mit einer konischen Innenfläche, einem ringförmigen Aussenleiter-Kontaktelement und einer Klemmbuchse, die so mit der Anschlussbuchse verbindbar ist, dass sie das Kontaktelement gegen die konisch Innenfläche drückt, wobei das Kontaktelement radial gegen den Kabelaussenleiter gedrückt wird, und wobei das ringförmige, einseitig offene Kontaktelement aus einem nichtleitenden elastischen Material besteht und an seiner Oberfläche mit einer leitenden Schicht versehen ist.

### DARSTELLUNG DER ERFINDUNG

Es ist eine Aufgabe der Erfindung, eine Kabelverschraubung der eingangs genannten Art so auszugestalten, dass eine sichere Kontaktierung der Abschirmung mit hoher Stromtragfähigkeit gewährleistet ist und auch bei starken Vibrationen und dynamischen Belastungen, des Kabels, wie sie durch Auslenkungen der Wagenkästen auftreten, dauerhaft erhalten bleibt.

Die Aufgabe wird durch den Anspruch 1 gelöst.

Die erfindungsgemässe Kabelverschraubung ist für ein Kabel bestimmt, welches wenigstens eine Abschirmung, einen die Abschirmung umschliessenden Kabelmantel und eine an den Kabelmantel aussen angespritzte Knickschutztülle umfasst, die Anschlagsmittel für die Kabelverschraubung aufweist. Die Kabelverschraubung weist einen im Wesentlichen hohlzylindrischen, elektrisch leitenden Kabelverschraubungskörper auf, welcher von der einen Seite bis zu den Anschlagsmitteln über die Knickschutztülle geschoben wird und mit dem den Anschlagsmitteln entgegengesetzten Ende über die Knickschutztülle übersteht, eine mit dem Kabelverschraubungskörper verschraubbare Überwurfmutter aufweist, welche von der anderen Seite bis zu den Anschlagsmitteln über die Knickschutztülle geschoben wird, und einen elektrisch leitenden, im Wesentlichen hohlzylindrischen, Kontaktierring aufweist, welcher kontaktierend von dem Kabelverschraubungskörper aufgenommen wird und zur Aufnahme und kontaktierenden Befestigung der Abschirmung des Kabels ausgebildet ist und dass der Kontaktierring mit einem Hülsenabschnitt aus dem Kabelverschraubungskörper herausragt, und dass auf der Aussenseite des Hülsenabschnitts die nach aussen und zurück gebogene Abschirmung des Kabels klemmend befestigbar ist.

Eine erste Ausgestaltung der Kabelverschraubung nach der Erfindung ist dadurch gekennzeichnet, dass der Kontaktierring im Kabelverschraubungskörper längsverschieblich gelagert ist. Hierdurch wird eine sichere mechanische Entkopplung zwischen Kabel und Kontaktierung am Kabelverschraubungskörper erreicht.

Eine andere Ausgestaltung der Erfindung ist dadurch gekennzeichnet, dass der Kontaktierring eine aussen umlaufende, ringförmige Kontaktnut aufweist, welche ein ringförmiges Kontaktelement zur Vermittlung des elektrischen Kontakts zwischen Kontaktierring und Kabelverschraubungskörper aufnimmt. Das ringförmige Kontaktelement ermöglicht einen sicheren und für hohe Ströme geeigneten Kontakt über den gesamten Umfang. Zugleich kann es ohne Schaden reibende Bewegungen zwischen Kontaktierring und Kabelverschraubungskörper aufnehmen, wenn es aus einem entsprechenden Material besteht.

Vorzugsweise kann das Kontaktelement als radial federnder Metallring, insbesondere nach dem "canted coil"-Prinzip, ausgebildet sein. Derartige Elemente sind beispielsweise unter der Bezeichnung Bal Seal^{®} bekannt und in der EP 0 339 544 B1 beschrieben.

Das Kontaktelement kann aber auch als aus einem elektrisch leitenden Kunststoff bestehender oder mit einer elektrisch leitenden Beschichtung überzogener O-Ring ausgebildet sein und so zusätzlich eine Dichtfunktion übernehmen.

Eine weitere Ausgestaltung der erfindungsgemässen Kabelverschraubung zeichnet sich dadurch aus, dass in axialer Richtung vor und/oder hinter der Kontaktnut eine aussen umlaufende, ringförmige Fixiernut angeordnet ist, welche einen O-Ring zur Fixierung des Kontaktierrings im Kabelverschraubungskörper aufnimmt. Durch die O-Ringe wird die axiale Bewegung des Kontaktierrings gedämpft. Gleichzeitig wird das Kontaktelement zusätzlich gegen äussere Einflüsse geschützt.

Die Befestigung der Abschirmung auf der Aussenseite des Hülsenabschnitts erfolgt vorzugsweise mittels eines Spannbandes.

Die angespritzte Knickschutztülle besteht insbesondere aus einem Kunststoff. al aus der Verschraubungsnut 24 heraus stehenden Ring bilden, an dem die verschraubbaren Teile 11 und 12 der Kabelverschraubung 10 anschlagen können.

Die genannten verschraubbaren Teile der Kabelverschraubung 10 sind ein im Wesentlichen hohlzylindrischer Kabelverschraubungskörper 11 und eine mit diesem verschraubbare Überwurfmutter 12. Wie in der oben genannten DE 101 35 971 C1 beschrieben ist, kann die Überwurfmutter - wenn die Halbschalen 25 noch nicht in die Verschraubungsnut 24 eingesetzt sind - ohne Schwierigkeiten über die Knickschutztülle 22 geschoben werden. Wenn dann die Halbschalen 25 in die Verschraubungsnut 24 eingesetzt sind, lässt sich das Kabel 20 mit der Knickschutztülle 22 bis zu dem Anschlag an den Halbschalen 25 in den Kabelverschraubungskörper 11 einschieben. Die auf dem Kabel 20 sitzende Überwurfmutter 12 wird dann soweit auf den Kabelverschraubungskörper 11 aufgeschraubt, bis sie von der anderen Seite an den Halbschalen 25 anliegt. Das Kabel 20 mit der angespritzten Knickschutztülle 22 ist dann in der Kabelverschraubung 10 fixiert.

In diesem verschraubten Zustand reichen die Knickschutztülle 22 und damit auch der Kabelmantel 21 nur bis etwa zur Hälfte in den Kabelverschraubungskörper 11 hinein. In die verbleibende Länge des Kabelverschraubungskörpers 11 kann nun von der anderen Seite ein im Wesentlichen hohlzylindrischer Kontaktierring 14 eingeschoben werden, der den elektrischen Kontakt zwischen der Abschirmung 26 und dem Kabelverschraubungskörper 11 vermitteln soll. Der Kontaktierring 14 sitzt längsverschieblich im Kabelverschraubungskörper 11. Er ragt mit einem Hülsenabschnitt 17 aus dem Kabelverschraubungskörper 11 heraus. Der Hülsenabschnitt 17, der an seinem freien Ende eine abgerundete ringförmige Kante aufweist, dient der kontaktierenden Befestigung der Abschirmung 26. Diese wird um die abgerundete Kante nach aussen und auf der Aussenfläche des Hülsenabschnitts 17 zurückgebogen, derart, dass die zurückgebogene Abschirmung 26 an der zylindrischen Aussenfläche weitgehend anliegt. In diesem Zustand wird die zurückgebogene Abschirmung 26 auf der zylindrischen Aussenfläche des Hülsenabschnitts 17 mit einem über den Hülsenabschnitt 17 mit der Abschirmung 26 geschobenen Spannband 18 dauerhaft fixiert und so elektrisch gut leitend und sicher mit dem Kontaktierring 14 verbunden.

Noch einfacher gestaltet sich die Montage der Kabelverschraubung 10, wenn der Montageverlauf wie folgt strukturiert ist:
a) Zuerst wird auf das das Kabel 20 die Knickschutztülle 22 aufgespritzt;
b) von dem Kabel wird dann der Kabelmantel 21 bis zur Knickschutztülle 22 entfernt (Abmantelung);
c) die Abschirmung 26 bzw. das Schirmgeflecht wird abgelängt und freigelegt (dies gilt für sowohl für gemeinsame wie auch für einzelne Abschirmungen);
d) der Kontaktierring 14 wird auf das freigelegte Kabelende aufgeschoben;
e) die Abschirmung 26 (und ggf. weitere Abschirmungen) wird (werden) über den Hülsenabschnitt 17 des Kontaktierrings 14 gelegt und mit dem Spannband 18 kontaktierend fixiert;
f) das vorkonfektionierte Kabel mit dem Kontaktierring 14 in den Kabelverschraubungskörper 11 einführen;
g) die Halbschalen 25 in die Verschraubungsnut 24 einsetzen und bis auf Anschlag am Kabelverschraubungskörper 11 einschieben; und
h) die bereits auf dem Kabel befindliche Überwurfmutter 12 montieren.

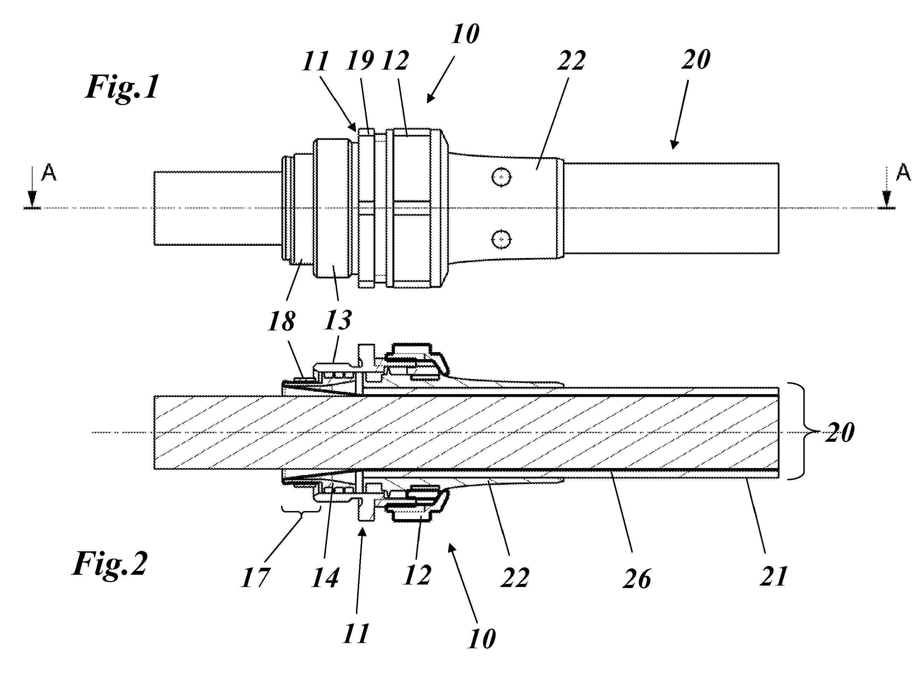

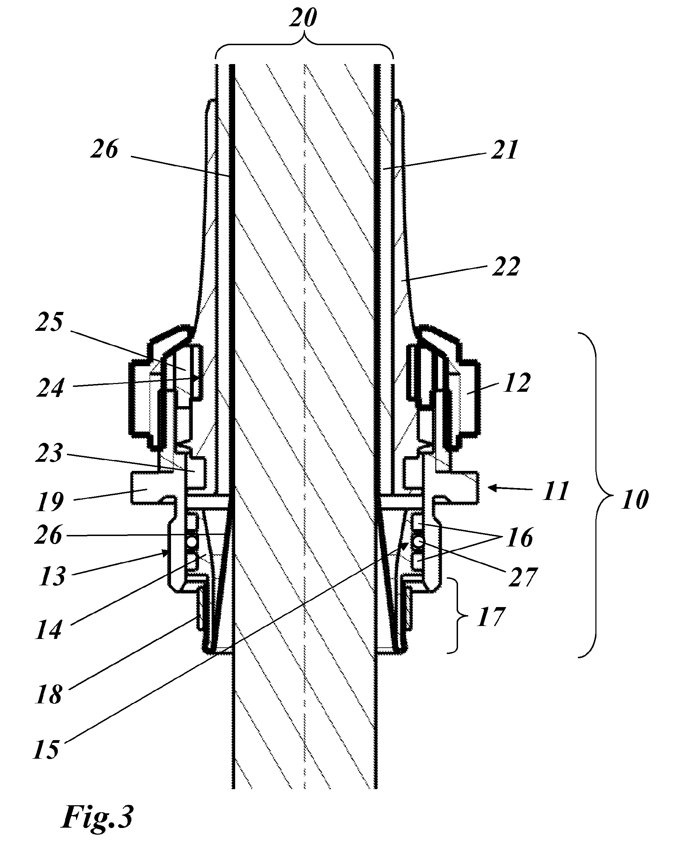

Der elektrische Kontakt zwischen dem Kontaktierring 14 und dem Kabelverschraubungskörper 11 wird durch einen Kontaktring 27 (Fig. 3) vermittelt, der in eine ringförmig umlaufende Kontaktnut 15 auf der Aussenseite des Kontaktierrings 14 eingelegt ist. Der Kontaktring 27 kann beispielsweise ein O-Ring aus einem elektrisch leitenden oder leitend beschichteten Kunststoff sein. Besonders günstig im Hinblick auf höhere Ströme ist ein Kontaktring 27, der als radial federnder Metallring, insbesondere nach dem "canted coil"-Prinzip, ausgebildet ist. Derartige Kontaktringe, welche die Gestalt einer schräg gewickelten Drahtspirale haben, sind beispielsweise unter der Bezeichnung Bal Seal^{®} bekannt und in der EP 0 339 544 B1 beschrieben.

Auf beiden Seiten der Kontaktnut 15 sind auf der Aussenseite des Kontaktierrings 14 zwei weitere gleichartige Fixiernuten 16 angeordnet, welche herkömmliche O-Ringe aufnehmen können, um den Kontaktierring 14 in Kabelverschraubungskörper 11 mehr oder weniger stark zu fixieren. Gleichzeitig schützen diese O-Ringe den dazwischen liegenden Kontaktring 27 vor schädlichen äusseren Einflüssen.

Im mittleren Bereich des Kabelverschraubungkörpers 11 ist ein flanschartiger Anschlag 19 angeformt, der an seinem Aussenumfang sechseckig ausgebildet ist und zum Kontern beim Anziehen der Überwurfmutter 12 dient. Auf der der Überwurfmutter 12 gegenüber liegenden Seite des Anschlags 19 ist auf der Aussenseite des Kabelverschraubungkörpers 11 ein Aussengewinde 13 vorgesehen. Die Kabelverschraubung 10 kann mit diesem Aussengewinde 13 bis zum Anschlag 19 durch eine entsprechende Öffnung in einer Gehäusewand oder einem Steckergehäuse hindurch gesteckt und mit einer auf das Aussengewinde 13 aufgeschraubten Schraube fixiert werden.

Die beschriebene Kabelverschraubung 10 ist, wie eingangs bereits erwähnt, vor allem für starke Kabel im Bahnbereich einsetzbar, bei denen Aussendurchmesser des Kabels 20 im Bereich von beispielsweise 10-50 mm vorkommen.

### Bezugszeichenliste

- 10: Kabelverschraubung
- 11: Kabelverschraubungskörper
- 12: Überwurfmutter
- 13: Aussengewinde
- 14: Kontaktierring
- 15: Kontaktnut (ringförmig)
- 16: Fixiernut (ringförmig)
- 17: Hülsenabschnitt
- 18: Spannband
- 19: Anschlag
- 20: Kabel
- 21: Kabelmantel
- 22: Knickschutztülle (angespritzt)
- 23: Dichtungsnut (ringförmig)
- 24: Verschraubungsnut
- 25: Halbschale (Clip)
- 26: Abschirmung (z.B. Drahtgeflecht)
- 27: Kontaktelement (ringförmig)

## Patentansprüche

1. Kabelverschraubung (10) für ein Kabel (20), welches wenigstens eine Abschirmung (26), einen die Abschirmung (26) umschliessenden Kabelmantel (21) und eine an den Kabelmantel (21) aussen angespritzte Knickschutztülle (22) umfasst, die Anschlagsmittel (24, 25) für die Kabelverschraubung (10) aufweist, wobei die Kabelverschraubung (10) einen im Wesentlichen hohlzylindrischen, elektrisch leitenden Kabelverschraubungskörper (11) aufweist, welcher von der einen Seite bis zu den Anschlagsmitteln (24, 25) über die Knickschutztülle (22) geschoben wird und mit dem den Anschlagsmitteln (24, 25) entgegengesetzten Ende über die Knickschutztülle (22) übersteht, eine mit dem Kabelverschraubungskörper (11) verschraubbare Überwurfmutter (12) aufweist, welche von der anderen Seite bis zu den Anschlagsmitteln (24, 25) über die Knickschutztülle (22) geschoben wird, **gekennzeichnet durch** einen elektrisch leitenden, im Wesentlichen hohlzylindrischen, Kontaktierring (14), welcher kontaktierend von dem Kabelverschraubungskörpers (11) aufgenommen wird und zur Aufnahme und kontaktierenden Befestigung der Abschirmung (26) des Kabels (20) ausgebildet ist, und dass der Kontaktierring (14) mit einem Hülsenabschnitt (17) aus dem Kabelverschraubungskörper (11) herausragt, und dass auf der Aussenseite des Hülsenabschnitts (17) die nach aussen und zurück gebogene Abschirmung (26) des Kabels (20) klemmend befestigbar ist.

2. Kabelverschraubung nach Anspruch 1, **dadurch gekennzeichnet, dass** die Befestigung der Abschirmung (26) auf der Aussenseite des Hülsenabschnitts (17) mittels eines Spannbandes (18) erfolgt.

3. Kabelverschraubung nach Anspruch 1, **dadurch gekennzeichnet, dass** der Kontaktierring (14) im Kabelverschraubungskörper (11) längsverschieblich gelagert ist.

4. Kabelverschraubung nach Anspruch 1, **dadurch gekennzeichnet, dass** der Kontaktierring (14) eine aussen umlaufende, ringförmige Kontaktnut (15) aufweist, welche ein ringförmiges Kontaktelement (27) zur Vermittlung des elektrischen Kontakts zwischen Kontaktierring (14) und Kabelverschraubungskörper (11) aufnimmt.

5. Kabelverschraubung nach Anspruch 4, **dadurch gekennzeichnet, dass** das Kontaktelement (27) als radial federnder Metallring ausgebildet ist.

6. Kabelverschraubung nach Anspruch 4, **dadurch gekennzeichnet, dass** das Kontaktelement (27) als aus einem elektrisch leitenden Kunststoff bestehender oder mit einer elektrisch leitenden Beschichtung überzogener O-Ring ausgebildet ist.

7. Kabelverschraubung nach einem der Ansprüche 4-6, **dadurch gekennzeichnet, dass** in axialer Richtung vor und/oder hinter der Kontaktnut (15) eine aussen umlaufende, ringförmige Fixiernut (16) angeordnet ist, welche einen O-Ring zur Fixierung des Kontaktierrings (14) im Kabelverschraubungskörper (11) aufnimmt.

8. Kabelverschraubung nach einem der Ansprüche 1-7, **dadurch gekennzeichnet, dass** die angespritzte Knickschutztülle (22) aus einem Kunststoff besteht.

9. Kabelverschraubung nach einem der Ansprüche 1-8, **dadurch gekennzeichnet, dass** die Anschlagsmittel (24, 25) eine in die Knickschutztülle (22) eingelassene, aussen umlaufende Verschraubungsnut (24) umfassen, sowie in die Verschraubungsnut (24) formschlüssig einsetzbare, aus der Verschraubungsnut (24) radial nach aussen vorstehende Anschlagselemente (25), an welchen der Kabelverschraubungskörper (11) und die Überwurfmutter (12) auf gegenüberliegenden Seiten anschlagen.

10. Kabelverschraubung nach Anspruch 9, **dadurch gekennzeichnet, dass** die Anschlagselemente als Halbschalen (25) ausgebildet sind.

11. Kabelverschraubung nach Anspruch 9 oder 10, **dadurch gekennzeichnet, dass** die Knickschutztülle (22), die Anschlagselemente (25) und die Überwurfmutter (12) so dimensioniert sind, dass die Überwurfmutter (12) bei fehlenden Anschlagselementen (25) vollständig über die Knickschutztülle (22) geschoben werden kann.

## Claims

1. A cable gland (10) for a cable (20) comprising at least a shield (26), a cable sheath (21) surrounding the shield (26), and an anti-kink grommet (22) injection molded onto the outside of the cable sheath (21) and including stop means (24, 25) for the cable gland (10), wherein the cable gland (10) comprises a substantially hollow cylindrical electrically conductive cable gland body (11) which is pushed over the anti-kink grommet (22) from one side as far as the stop means (24, 25) and projects beyond the anti-kink grommet (22) with the end opposite the stop means (24, 25), a union nut (12) which can be screwed to the cable gland body (11) and is pushed over the anti-kink grommet (22) from the other side as far as the stop means (24, 25), **characterized by** an electrically conductive, substantially cylindrical contact-making ring (14) which is received by the cable gland body (11) in a contact-making manner and is designed to receive the shield (26) of the cable (20) and to fasten said shield (26) in a contact-making manner, and in that the contact-making ring (14) projects with a sleeve portion (17) out of the cable gland body (11), and that on the outside of the sleeve portion (17) the shield (26), which is bent outwards and back, of the cable (20) can be fastened in a clamping manner.

2. The cable gland according to claim 1, **characterized in that** the fastening of the shield (26) takes place on the outside of the sleeve portion (17) by means of a gripping band (18).

3. The cable gland according to claim 1, **characterized in that** the contact-making ring (14) is mounted in the cable gland body (11) in a longitudinally displaceable manner.

4. The cable gland according to claim 1, **characterized in that** the contact-making ring (14) has an externally circumferential, annular contact groove (15) which receives an annular contact element (27) for creating electrical contact between the contact-making ring (14) and the cable gland body (11).

5. The cable gland according to claim 4, **characterized in that** the contact element (27) is formed as a radially resilient metal ring.

6. The cable gland according to claim 4, **characterized in that** the contact element (27) is formed as an O-ring made of electrically conductive plastic or coated with an electrically conductive coating.

7. The cable gland according to one of claims 4-6, **characterized in that** an externally circumferential, annular fixing groove (16) is arranged in front of and/or behind the contact groove (15) in the axial direction and receives an O-ring for fixing the contact-making ring (14) in the cable gland body (11).

8. The cable gland according to one of claims 1-7, **characterized in that** the injection-molded anti-kink grommet (22) is made of a plastic.

9. The cable gland according to one of claims 1-8, **characterized in that** the stop means (24, 25) comprise an externally circumferential screwing groove (24) in the anti-kink grommet (22), and also stop elements (25) which can be inserted into the screwing groove (24) in a form-locking manner, project radially outwards out of the screwing groove (24) and against which the cable gland body (11) and the union nut (12) stop on opposite sides.

10. The cable gland according to claim 9, **characterized in that** the stop elements are formed as half-shells (25).

11. The cable gland according to claim 9 or 10, **characterized in that** the anti-kink grommet (22), the stop elements (25) and the union nut (12) are dimensioned so that the union nut (12) can be pushed completely over the anti-kink grommet (22) when the stop elements (25) are missing.

## Revendications

1. Presse-étoupe (10) pour un câble (20) comprenant au moins un blindage (26), une gaine de câble (21) entourant le blindage (26) et un manchon anti-flambage (22) surmoulé par injection sur l'extérieur de la gaine de câble (21), lequel comporte des moyens de butée (24, 25) pour le presse-étoupe (10), dans lequel le presse-étoupe (10) comporte un corps de presse-étoupe (11) électriquement conducteur essentiellement en forme de cylindre creux, lequel est coulissé par-dessus le manchon anti-flambage (22) par un côté jusqu'aux moyens de butée (24, 25), et fait saillie avec son extrémité opposée aux moyens de butée (24, 25) au-delà du manchon anti-flambage (22), et comporte un écrou-raccord (12) apte à être vissé avec le corps de presse-étoupe (11), lequel est coulissé par-dessus le manchon anti-flambage (22) par l'autre côté jusqu'aux moyens de butée (24, 25), **caractérisé par** une bague de contact (14) électriquement conductrice, essentiellement en forme de cylindre creux, laquelle est reçue avec contact par le corps de presse-étoupe (11) et conçue pour recevoir et fixer avec contact le blindage (26) du câble (20), et en ce que la bague de contact (14) fait saillie hors du corps de presse-étoupe (11) avec une section de douille (17), et en ce que le blindage (26) du câble (20) courbé vers l'extérieur et recourbé peut être fixé par serrage sur le côté extérieur de la section de douille (17).

2. Presse-étoupe selon la revendication 1, **caractérisé en ce que** la fixation du blindage (26) sur le côté extérieur de la section de douille (17) est réalisée au moyen d'une bande de serrage (18).

3. Presse-étoupe selon la revendication 1, **caractérisé en ce que** la bague de contact (14) est montée de façon à pouvoir coulisser longitudinalement dans le corps de presse-étoupe (11).

4. Presse-étoupe selon la revendication 1, **caractérisé en ce que** la bague de contact (14) présente une rainure de contact annulaire (15) s'étendant sur la périphérie extérieure, laquelle est destinée à recevoir un élément de contact annulaire (27) pour la transmission du contact électrique entre la bague de contact (14) et le corps de presse-étoupe (11).

5. Presse-étoupe selon la revendication 4, **caractérisé en ce que** l'élément de contact (27) est conçu comme une bague métallique radialement élastique.

6. Presse-étoupe selon la revendication 4, **caractérisé en ce que** l'élément de contact (27) est conçu comme un joint torique constituée d'un plastique électriquement conducteur ou recouverte d'un revêtement électriquement conducteur.

7. Presse-étoupe selon l'une des revendications 4-6, **caractérisé en ce qu'**une rainure de fixation (16) annulaire s'étendant sur la périphérie extérieure est disposée en amont et/ou en aval de la rainure de contact (15) dans la direction axiale, laquelle reçoit un joint torique pour fixer la bague de contact (14) dans le corps de presse-étoupe (11).

8. Presse-étoupe selon l'une des revendications 1-7, **caractérisé en ce que** le manchon anti-flambage (22) surmoulé par injection est constitué d'un plastique.

9. Presse-étoupe selon l'une des revendications 1-8, **caractérisé en ce que** les moyens de butée (24, 25) comprennent une rainure de vissage (24) s'étendant sur la périphérie extérieure intégrée dans le manchon anti-flambage (22), ainsi que des éléments de butée (25) faisant saillie radialement vers l'extérieur à partir de la rainure de vissage (24), aptes à être insérés par complémentarité de forme dans la rainure de vissage (24), sur lesquels le corps de presse-étoupe (11) et l'écrou-raccord (12) butent sur des côtés opposés.

10. Presse-étoupe selon la revendication 9, **caractérisé en ce que** les éléments de butée sont conçus comme des demi-coques (25).

11. Presse-étoupe selon la revendication 9 ou 10, **caractérisé en ce que** le manchon anti-flambage (22), les éléments de butée (25) et l'écrou-raccord (12) sont dimensionnés de telle façon que l'écrou-raccord (12) peut coulisser entièrement par-dessus le manchon anti-flambage (22) en absence d'éléments de butée (25).
